# EUROPEAN PATENT APPLICATION

(11) **EP 4 842 052 A1**
(43) Date of publication of application: **18.11.2026**
(21) Application number: 24916859.2
(22) Date of filing: 27.12.2024
(51) Int. Cl.: H04W 28/16, H04W 8/22, H04W 28/06, H04W 84/12, H04W 92/20

(54) **COMMUNICATION DEVICE, COMMUNICATION METHOD, AND PROGRAM**

(30) Priority: 09.01.2024 JP 2024001499
(71) Applicant: Canon Kabushiki Kaisha, Tokyo 146-8501 (JP)
(72) Inventor: MINAKAWA, Atsushi, Tokyo 146-8501 (JP)
(74) Representative: Canon Europe Limited
(86) International application number: PCT/JP2024/046331
(87) International publication number: WO 2025/150456

(57) **Abstract**

A communication apparatus functioning as an access point complying with the IEEE 802.11 series standard receives, from one or more other communication apparatuses functioning as an access point, a wireless frame including capability information indicating a preparation time necessary for preparation for transmission of a signal to the communication apparatus, determines, based on the capability information, a length of a Padding in a trigger frame for causing the one or more other communication apparatuses to perform the transmission of the signal to the communication apparatus, and transmits the trigger frame including the Padding of the determined length to the one or more other communication apparatuses in a case where data from the one or more other communication apparatuses should be received.

## Description

### TECHNICAL FIELD

The present invention relates to a control technique for communication between a plurality of access points.

### BACKGROUND ART

As a communication standard associated with wireless LAN (Local Area Network), the IEEE (Institute of Electrical and Electronics Engineers) 802.11 series standard is known. The IEEE 802.11 series standard includes standards such as IEEE 802.11a/b/g/n/ac/ax/be (see PTL 1). For the IEEE 802.11be standard or a successor standard thereof, introduction of a technique for improving communication efficiency or throughput by making a plurality of access point devices (to be sometimes referred to as "AP" hereinafter) coordinately operate has been examined. The communication technique for causing a plurality of APs to coordinately operate is called multi-AP communication. In the multi-AP communication, APs are classified into one Coordinator AP that manages all APs, and Coordinated APs that operate under the management of the Coordinator.

### CITATION LIST

### PATENT LITERATURE

PTL 1: Japanese Patent Laid-Open No. 2018-050133

### SUMMARY OF INVENTION

### TECHNICAL PROBLEM

The Coordinator AP is assumed to, for example, perform control to assign a transmission opportunity (TXOP) to each Coordinated AP in a predetermined period. Here, the Coordinated AP may need a predetermined time to complete preparation for communication in accordance with the contents of the communication to be executed in the AP. For this reason, it is important for the Coordinator AP to set the TXOP for the Coordinated AP in consideration of the period of communication preparation.

### SOLUTION TO PROBLEM

The present invention provides a technique for improving reliability of communication between a plurality of access points.

A communication apparatus according to one aspect of the present invention is a communication apparatus functioning as an access point complying with the IEEE 802.11 series standard, comprising: reception means for receiving, from one or more other communication apparatuses functioning as an access point, a wireless frame including capability information indicating a preparation time necessary for preparation for transmission of a signal to the communication apparatus; determination means for determining, based on the capability information, a length of a Padding in a trigger frame for causing the one or more other communication apparatuses to perform the transmission of the signal to the communication apparatus; and transmission means for transmitting the trigger frame including the Padding of the determined length to the one or more other communication apparatuses in a case where data from the one or more other communication apparatuses should be received.

### ADVANTAGEOUS EFFECTS OF INVENTION

According to the present invention, it is possible to improve reliability of communication between a plurality of access points.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a view showing an example of the configuration of a wireless communication system;
Fig. 2 is a view showing an example of the hardware configuration of a communication apparatus;
Fig. 3 is a view showing an example of the functional configuration of the communication apparatus;
Fig. 4 is a view showing an example of an information element transmitted from a Coordinated AP;
Fig. 5 is a view showing an example of the configuration of a trigger frame;
Fig. 6 is a view showing an example of the procedure of communication processing;
Fig. 7 is a view showing an example of the procedure of communication processing;
Fig. 8 is a view showing an example of processing executed by a Coordinator AP; and
Fig. 9 is a view showing an example of processing executed by a Coordinated AP.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### (Configuration of Wireless Communication System)

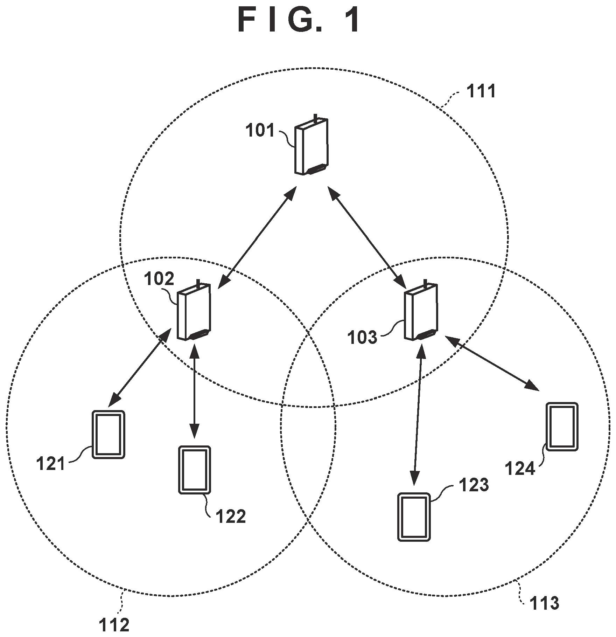

Fig. 1 shows an example of configuration of a wireless communication system according to this embodiment. In an example, the wireless communication system is configured to perform wireless communication by a wireless local area network (wireless LAN) complying with the IEEE 802.11 series standard. Note that IEEE is short for Institute of Electrical and Electronics Engineers. A description will be made below assuming a wireless LAN complying with the IEEE 802.11 series standard. However, the present invention is not limited to this, and a method to be described below may be applied to communication complying with another wireless communication standard. In the example shown in Fig. 1, as communication apparatuses for performing wireless communication, three access points (an AP 101 to an AP 103) and four stations (STAs 122 to 124) are shown. Note that an access point will sometimes be referred to as an AP or an AP STA, and a station will sometimes be referred to as an STA or a Non-AP STA hereinafter. The example shown in Fig. 1 is merely an example, and the wireless communication system is configured such that at least two APs perform communication (coordinated communication) by sharing a transmission opportunity (TXOP). That is, the number of APs may be two, or four or more. Similarly, the number of STAs may be one to three, or five or more.

The AP 101 to the AP 103 are configured to operate complying with a successor standard of the IEEE 802.11be standard having a target maximum transmission speed of 46.08 Gbps (gigabits per second), and the target transmission speed of the successor standard is 90 to 100 Gbps or more. Similarly, the STAs 121 to 124 can also be configured to operate complying with the successor standard. The successor standard will be referred to as the IEEE 802.11bn standard or UHR standard hereinafter. A wireless frame transmitted/received in the successor standard will be referred to as a UHR PPDU. Note that UHR is short for Ultra High Reliability. Also, PPDU is short for PLCP Protocol Data Unit, and PLCP is short for Physical Layer Convergence Protocol. The main features of the UHR standard are support of high-reliable communication or low-latency communication and AP coordination. Note that the names "IEEE 802.11bn standard" and "UHR standard" are names set for successor standards with such features for the sake of convenience, and may be different names when formulation of the standard is completed. That is, a description will be made below using the name "IEEE 802.11bn standard" or "UHR standard", and the following explanation can be applied even to a standard of another name, for example, another successor standard of the UHR standard. Note that the AP 101 to the AP 103 and the STAs 121 to 124 can be configured to perform communication complying with, for example, one of legacy standards such as the IEEE 802.11a/b/g/n/ac/ax/be standards.

In the example shown in Fig. 1, the STA 121 and the STA 122 participate in a network 112 formed by the AP 102, and the STA 123 and the STA 124 participate in a network 113 formed by the AP 103. The AP 101 to the AP 103 can perform MU (Multi User) communication in which communication is parallelly performed with a plurality of STAs using the OFDMA (Orthogonal Frequency Division Multiple Access) technique. In the MU communication using the OFDMA technique, one frequency channel is divided into a plurality of subchannels each called an RU (Resource Unit). The divided RUs are assigned as resources used for communication with different STAs (or STA groups formed by a plurality of STAs). This allows the AP and the plurality of STAs to parallelly perform communication via one frequency channel. At this time, when transmitting data from the AP to one or more STAs, the AP transmits an MU (Multi User) PPDU with modulated data by the OFDMA. If all communication apparatuses involved in MU communication support the UHR standard, a UHR MU PPDU that is an MU PPDU complying with the UHR standard can be transmitted to the one or more STAs.

In addition, the AP 101 to the AP 103 or the STA 121 to the STA 124 can be configured to support wireless communication based on another communication standard such as Bluetooth^{®}, NFC, or Bluetooth^{®} LE (Low Energy). Here, NFC is short for Near Field Communication. Also, the AP 101 to the AP 103 may be configured to support wired communication using an Ethernet^{®} cable or wired communication using an optical fiber. The AP 101 to the AP 103 can each be, for example, a wireless LAN router or a personal computer (PC) but are not limited to these. The STA 121 to the STA 124 can each be, for example, a camera, a tablet, a smartphone, a PC, a portable telephone, a video camera, or a wearable device such as smartglasses but are not limited to these. The AP 101 to the AP 103 or the STA 121 to the STA 124 may each be an information processing apparatus such as a wireless chip that supports at least one of transmission and reception of a UHR PPDU.

Note that in this embodiment, when the AP 101 to the AP 103 provide networks, the BSSIDs of the networks are different. Note that BSSID is short for Basic Service Set Identifier, and this is an identifier for identifying an access point. The communication apparatuses such as the AP 101 to the AP 103 and the STA 121 to the STA 124 can perform communication using bandwidths of 20 MHz, 40 MHz, 80 MHz, 160 MHz, 320 MHz, 480 MHz, and 640 MHz.

In this embodiment, the AP 101 to the AP 103 each have an AP coordination function of operating with other APs emphatically. Here, the AP 101 is an AP that performs general control for AP coordination, and such an AP will sometimes be referred to as Coordinator AP hereinafter. Also, the AP 102 and the AP 103 are APs functioning as controlled apparatuses that are controlled by the Coordinator AP, and such an AP will sometimes be referred to as Coordinated AP hereinafter. The roles of the Coordinator AP and the Coordinated AP may be changed dynamically. That is, after the AP 101 functions as a Coordinator AP, the AP 102 or the AP 103 may function as a Coordinator AP and control the AP 101 functioning as a Coordinated AP. Note that the AP 101 provides a network 111, the AP 102 provides the network 112, and the AP 103 provides the network 113. The STA 121 to the STA 124 are each an STA participating in the network provided by one of the APs.

The AP 101 transmits a trigger frame to the AP 102 and the AP 103. The trigger frame is a mechanism introduced in the standard from IEEE 802.11ax onwards and is used to allow a plurality of STAs to receive a trigger frame transmitted from an AP and transmit frames in parallel. More specifically, an STA receives a trigger frame targeting the self-apparatus and, after the elapse of an SIFS period, performs uplink (UL) communication using an assigned resource unit (RU). Here, SIFS is Short IFS defined in the IEEE 802.11 series standard, and IFS is Inter-Frame Space. This mechanism enables efficient use of a wireless medium.

By using the mechanism of the trigger frame, the AP 102 and the AP 103 can parallelly perform uplink (UL) communication at a timing based on the trigger frame from the AP 101. Note that in this embodiment, "UL" in communication between the APs indicates a link in a direction to transmit data from the Coordinated AP (the AP 102 or the AP 103) to the Coordinator AP (AP 101). Here, the AP 102 and the AP 103 may need advance preparation for transmission using the assigned RU. For example, the AP 102 and the AP 103 may each need a predetermined time until preparation for UL communication is completed by performing communication control such as scheduling in the network formed by the self-apparatus or performing processing for handling a relatively enormous quantity of data. For this reason, it is conceivable that the AP 102 and the AP 103 may not be ready for UL communication after the SIFS period has elapsed from the reception of the trigger frame transmitted from the AP 101. Here, if the AP 102 and the AP 103 are not ready for UL communication after the SIFS has elapsed from the reception of the trigger frame transmitted from the AP 101, these can transmit a frame of UL communication after waiting for completion of the preparation. In this case, however, a period longer than the SIFS period may be generated between the end of the trigger frame transmitted from the AP 101 and the start of the frame for UL communication transmitted from the AP 102 or the AP 103. As a result, in the period, another communication apparatus may determine that the frequency channel is not used and start transmitting a frame. In this case, although the AP 101 assigns a transmission opportunity (TXOP) to the AP 102 and the AP 103 by the trigger frame, the AP 102 or the AP 103 may be unable to perform communication in the TXOP.

In this embodiment, considering this situation, the AP 101 makes the trigger frame long such that the AP 102 or the AP 103 can start UL communication at a timing at which preparation for UL communication is completed. That is, the AP 101 adjusts the length of the trigger frame by adding a Padding to the trigger frame such that UL communication is reliably performed after the elapse of the SIFS period from the end of the trigger frame. Here, if the Padding is too long, the communication efficiency may be lowered. On the other hand, if the Padding is short, communication of the AP 102 or the AP 103 may not be started after SIFS from the end of the trigger frame. In this embodiment, considering this situation, each AP is configured to perform control processing for setting a Padding of an appropriate length. The configuration of the AP that performs the processing, the procedure of processing executed by the AP, and an example of control information used for such control will be described below.

Note that a case where the AP 101 is the Coordinator AP and the AP 102 and the AP 103 are the Coordinated APs will be described below, but the present invention is not limited to this. That is, the AP 102 or the AP 103 may function as the Coordinator AP. Also, for example, the role of the Coordinator AP and the role of the Coordinated AP may be changed dynamically. Furthermore, in the following explanation, an example in which two APs (the AP 102 and the AP 103) perform UL communication in parallel will be described, but the same procedure can be used even when one AP performs UL communication. If only one AP performs UL communication, Padding is performed in consideration of a preparation time for the UL communication, thereby preventing interruption by another communication apparatus at the time of UL communication of the one AP. Also, if a plurality of APs perform UL communication, Padding is performed in consideration of the preparation time in each AP, thereby allowing the plurality of APs to perform communication in parallel at a common timing while preventing interruption by another communication apparatus.

### (Configuration of Apparatus)

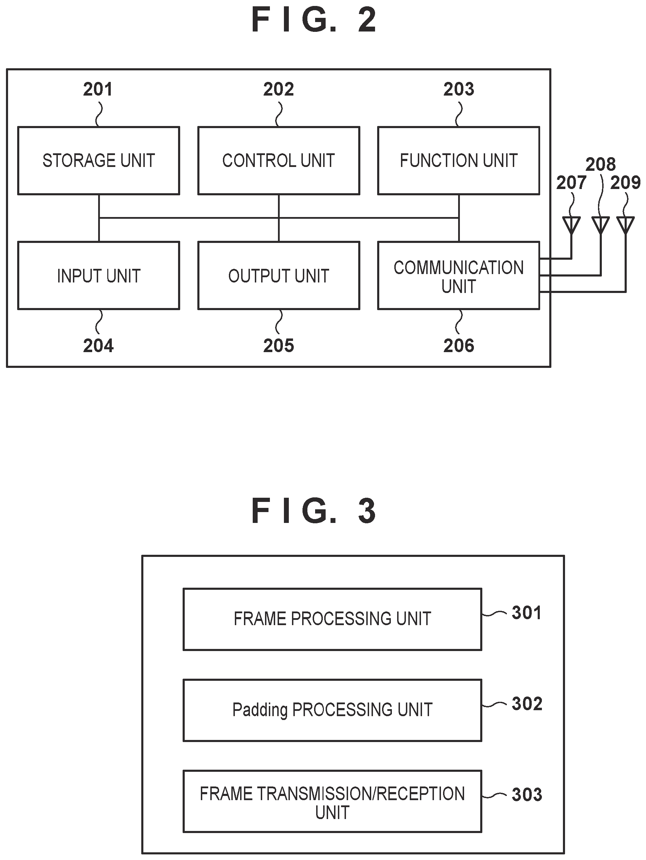

An example of the configuration of a communication apparatus (the AP 101 to the AP 103) according to this embodiment, which functions as an AP, will be described with reference to Fig. 2. Fig. 2 shows an example of the hardware configuration of the AP. As shown in Fig. 2, the AP includes, as its hardware configuration, for example, a storage unit 201, a control unit 202, a function unit 203, an input unit 204, an output unit 205, a communication unit 206, and antennas 207 to 209.

The storage unit 201 is configured to include one or more memories such as a ROM and a RAM, and stores computer programs configured to perform various kinds of operations to be described later and various kinds of information such as communication parameters for wireless communication. Note that ROM is short for Read Only Memory and RAM is short for Random Access Memory. Note that in addition to or in place of the memory such as a ROM or a RAM, the storage unit 201 may include a storage medium such as a flexible disk, a hard disk, an optical disk, a magnetooptical disk, a CD-ROM, a CD-R, a magnetic tape, a nonvolatile memory card, or a DVD. The storage unit 201 may include Solid State Drive (SSD). Also, the storage unit 201 may include a plurality of memories.

The control unit 202 is formed by one or more processors such as a CPU and an MPU, and controls the whole AP by executing, for example, computer programs stored in the storage unit 201. Note that CPU is short for Central Processing Unit, and MPU is short for Micro Processing Unit. The control unit 202 can be configured to execute processing of generating data or signals to be transmitted in communication with another communication apparatus in addition to control of the whole AP. Note that the control unit 202 may be configured to, for example, execute processing such as control of the whole AP by cooperation of computer programs and an OS (Operating System) stored in the storage unit 201. In addition, the control unit 202 may include a plurality of processors such as a multi-core processor, and execute processing such as control of the whole AP by the plurality of processors. Also, the control unit 202 may be formed from an ASIC (Application-Specific Integrated Circuit), a DSP (Digital Signal Processor), an FPGA (Field Programmable Gate Array), or the like.

In addition, the control unit 202 controls the function unit 203 to execute predetermined processing such as image capturing, printing, or projection. The function unit 203 is hardware used by the AP to execute predetermined processing. For example, if the AP is a camera such as a digital still camera or a smartphone with a camera, the function unit 203 is an image capturing unit and performs processing of capturing an image of the periphery. Also, for example, if the AP is a printer, the function unit 203 is a print unit and performs print processing on a sheet such as paper based on, for example, print data stored in the storage unit 201 or obtained from the outside via wireless communication. Also, for example, if the AP is a projector or smartglasses, the function unit 203 is a projection unit and performs projection processing of, for example, image data or video data stored in the storage unit 201 or obtained from the outside via wireless communication. In a case of smartglasses, the projection surface is the retina of an end user, or the like. Data to be processed by the function unit 203 may be data stored in the storage unit 201, or may be data communicated with another AP or STA via the communication unit 206 to be described later. Furthermore, the AP can provide a network storage function such as an NAS (Network Attached Storage). This function is provided as a web service such as a network storage service to another communication apparatus. For example, another communication apparatus such as an STA is connected to a network storage service provided by the AP 101 to the AP 103 using a protocol such as SMB, FTP, or WebDAV. The other communication apparatus such as an STA can upload a file to the storage service or download a file in the storage. Data communication for upload or download at this time can be performed using, for example, a wireless communication function complying with the UHR standard or the like.

The input unit 204 accepts various kinds of operations from the user. The output unit 205 performs various kinds of outputs to the user. Here, the output by the output unit 205 includes, for example, at least one of display on a screen, audio output by a speaker, and vibration output. Note that both the input unit 204 and the output unit 205 may be implemented by one module, like a touch panel. Also, each of the input unit 204 and the output unit 205 may be incorporated in the AP, or may be configured as an external apparatus connected to the AP.

The communication unit 206 controls wireless communication complying with the IEEE 802.11 series standard or controls Internet Protocol (IP) communication. The communication unit 206 executes transmission/reception of a UHR PPDU that is a wireless frame of the UHR standard or a PPDU supporting a preceding standard in cooperation with the antennas 207 to 209. The antennas 207 to 209 are antennas capable of transmitting/receiving a signal in at least one of frequency bands of, for example, the sub-GHz band, the 2.4-GHz band, the 5-GHz band, the 6-GHz band, the 7-GHz band, and the 60-GHz band. In this embodiment, three antennas 207 to 209 are shown. However, the number of antennas may be one or two, or four or more antennas may be prepared. In an example, a different antenna may be prepared for each frequency band. Also, if the AP includes a plurality of antennas, a plurality of communication units 206 corresponding to the plurality of antennas may be provided. Note that if the AP supports the above-described NFC standard or Bluetooth^{®} standard, a communication unit 206 configured to control wireless communication complying with the communication standard can be prepared.

Fig. 3 shows an example of the functional configuration of the AP. The AP includes, at its functional configuration, a frame processing unit 301, a Padding processing unit 302, and a frame transmission/reception unit 303. These functions can be implemented by, for example, executing programs stored in the storage unit 201 by the control unit 202 or by a processing function unit in the communication unit 206. Note that Fig. 3 is a view for explaining main functions according to this embodiment, and other functions are omitted. Hence, the AP can have, for example, control functions as a normal AP for establishment of connection or communication and functions generally provided in a communication apparatus, as a matter of course. Also, a plurality of function blocks in Fig. 3 may be integrated into one function block, or one function block may be divided into a plurality of function blocks.

The frame processing unit 301 interprets various kinds of wireless frames received from the outside and performs notification to a function (not shown) of an upper layer or control processing of wireless communication based on information obtained by the interpretation. Also, when transmitting data to a partner apparatus of communication, the frame processing unit 301 generates a data frame including the data. The frame processing unit 301 of the AP 101 can obtain capability information for determining a Padding from a frame received from the AP 102 or the AP 103. Also, the frame processing unit 301 of the AP 101 generates a trigger frame including a Padding determined based on the obtained capability information. Also, the frame processing unit 301 of the AP 101 can generate a request frame to be transmitted to the AP 102 or the AP 103 to request the above-described capability information. Additionally, the frame processing unit 301 of the AP 102 or the AP 103 generates a notification frame including capability information to be used by the AP 101 to determine the Padding. Also, the frame processing unit 301 of the AP 102 or the AP 103 processes a trigger frame or a request frame including a Padding, which is received from the AP 101. Note that the notification frame or the request frame transmitted/received between the APs can be a management frame complying with the IEEE 802.11 series standard, for example, a Probe Request, Probe Response, Beacon, or Action frame. Note that if an Action frame is used, the value of its Category code can be set to a value indicating that the frame is to be used for transmission/reception of information for determining the length of the Padding. However, this is merely an example, and it suffices that the frame can be used to notify information for determining the Padding or request such information, and a frame that is not a management frame may be used as the above-described notification frame or request frame.

The Padding processing unit 302 of the AP 101 determines a Padding to be added to a trigger frame based on capability information included in the notification frame (for example, a management frame) from the AP 102 or the AP 103. Also, the Padding processing unit 302 of the AP 102 or the AP 103 notifies the frame processing unit 301 of the capability information to be used to determine a Padding corresponding to a preparation time necessary for starting UL communication and causes the frame processing unit 301 to generate a notification frame. The frame transmission/reception unit 303 receives a wireless frame such as an UHR PPDU transmitted from another external communication apparatus by cooperating with the antennas 207 to 209. In addition, the frame transmission/reception unit 303 transmits a wireless frame such as a UHR PPDU generated by the frame processing unit 301 to a partner apparatus of communication (another AP or STA).

### (Frame Configuration)

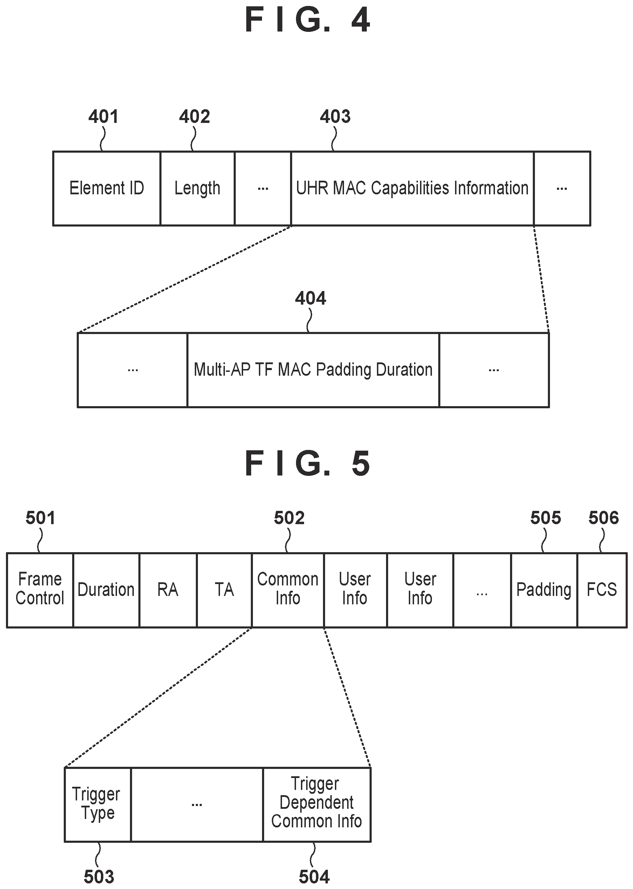

Next, the configurations of frames transmitted/received for coordinated communication between the APs according to this embodiment will be described with reference to Figs. 4 and 5.

Fig. 4 shows an example of an information element used by the Coordinated AP (the AP 102 or the AP 103) to transmit, to the Coordinator AP (AP 101), capability information usable for determining a Padding. This information element is stored in a management frame such as a Beacon, Probe Response, or Action frame or another wireless frame and sent. In this information element, an Element ID field 401 is a field to store information for identifying the type of the information element. Here, for example, information for specifying that it is an information element for storing a Capability group of the UHR standard is stored in the Element ID field 401. A Length field 402 stores a value indicating the length of the information element. A UHR MAC Capabilities field 403 stores, for example, capability information concerning a MAC (Media Access Control) layer in the Capability group of the UHR standard. In an example, a Multi-AP TF MAC Padding Duration subfield 404 is included in the UHR MAC Capabilities field 403. The Multi-AP TF MAC Padding Duration subfield 404 stores capability information indicating a preparation time necessary for the Coordinated AP to start UL communication (or capable of at least specifying the preparation time). Note that Multi-AP TF MAC Padding Duration is an example of the name of the subfield used to store capability information, and a subfield (or field) of another name to store similar information may be used. In the Multi-AP TF MAC Padding Duration subfield 404, for example, information as shown in Table 1 is stored.

**Table 1**

| Subfield | Definition | Encoding | |
|---|---|---|---|
| Multi-AP TF MAC Padding Duration | used to determine a Padding to be added to a trigger frame | For an AP: | |
| | | | Set to 0 to indicate 0 |
| | | | Set to 1 to indicate 8 µs, |
| | | | Set to 2 to indicate 16 µs |
| | | | |
| | | | The value 3 is reserved |
| | | | |

Note that as the subfield to store capability information concerning the above-described preparation time, a subfield defined by a conventional standard may be used. For example, as the subfield, a Trigger Frame MAC Padding Duration subfield defined by a standard from the IEEE 802.11ax standard onwards, as shown in Table 2, may be used.

**Table 2**

| Subfield | Definition | Encoding | |
|---|---|---|---|
| Trigger Frame MAC Padding Duration | used to determine a Padding to be added to a trigger frame | For a non-AP and an AP: | |
| | | | Set to 0 to indicate 0 |
| | | | Set to 1 to indicate 8 µs, |
| | | | Set to 2 to indicate 16 µs |
| | | | |
| | | | The value 3 is reserved |
| | | | |

Here, the information shown in Table 2 can be used for both an AP and an STA (Non-AP STA). That is, the information as shown in Table 2 can be used in both a notification of capability information from a conventional STA and a notification of capability information from a Coordinated AP according to this embodiment. In an example, if information indicating that the frame including the information element is used to transmit capability information between APs is included, the information element can be interpreted as for an AP. Also, if the frame including the information element is used for communication between an AP and an STA, the information element can be interpreted as for an STA. As shown in Table 3, the number of bits of the subfield is expanded from 2 to 3 (values 0 to 7 are usable), and which one of information for an AP and information for an STA is stored may be discriminated based on the contents of the information. In the information element shown in Table 3, 1 bit at the top of the 3 bits indicates whether the information is information for an STA or information for an AP. That is, if 1 bit at the top is 0 (in a case of values 0 to 3), it indicates information for an STA, and if 1 bit at the top is 1 (in a case of values 4 to 7), it indicates information for an AP. However, this is merely an example and, for example, the bit at the end may indicate whether the information is information for an STA or information for an AP, that is, the information can be notified in an arbitrary format.

**Table 3**

| Subfield | Definition | Encoding | |
|---|---|---|---|
| Trigger Frame MAC Padding Duration | used to determine a Padding to be added to a trigger frame | For a non-AP: | |
| | | | Set to 0 to indicate 0 |
| | | | Set to 1 to indicate 8 µs, |
| | | | Set to 2 to indicate 16 µs |
| | | | |
| | | | The value 3 is reserved |
| | | | |
| | | For an AP: | |
| | | | Set to 4 to indicate 0 |
| | | | Set to 5 to indicate 8 µs, |
| | | | Set to 6 to indicate 16 µs |
| | | | |
| | | | The value 7 is reserved |

Also, in an example, the preparation time of the AP may largely vary in accordance with, for example, a load by communication with an STA. For this reason, the number of bits of the information may be increased to expand the range of values of the preparation time for the AP (in Tables 1 to 3, 0 to 16 µs (microseconds)). For example, the value of the preparation time may be indicated in 8 stages using 3 bits, or the value of the preparation time may be indicated in 16 stages using 4 or more bits.

Fig. 5 shows an example of the format of a trigger frame that the Coordinator AP (AP 101) transmits to the Coordinated APs (the AP 102 and the AP 103) when performing coordinated communication between the APs. In a Frame Control field 501, for example, a value indicating that the frame is a trigger frame used in a standard from the IEEE 802.11ax standard onwards is stored. In a Common Info field 502, information commonly applied to a plurality of Coordinated APs that are the destinations of the trigger frame is stored. The Common Info field 502 includes a Trigger Type field 503 and a Trigger Dependent Common Info field 504. In the Trigger Type field 503, information for identifying the type of the trigger frame is stored. In the Trigger Dependent Common Info field 504, information depending on the trigger frame is stored. A Padding 505 is added to give to the AP group receiving the trigger frame, a sufficient time to prepare for UL communication. The length of the Padding 505 is specified based on, for example, capability information (the value in the Multi-AP TF MAC Padding Duration subfield 404) notified from each AP. In an example, for each of one or more Coordinated APs as the target of the trigger frame, a length corresponding to the largest value of time lengths indicated by received capability information is determined as the length of the Padding 505. For example, if the capability information of the AP 102 indicates 8 µs (microseconds) and the capability information of the AP 103 indicates 16 µs, the Padding 505 having a length corresponding to 16 µs that is a longer one of these values can be prepared. Note that this is merely an example, and the length of the Padding 505 may be determined by another criterion. For example, for each of one or more Coordinated APs as the target of the trigger frame, a length corresponding to the smallest value of time lengths indicated by received capability information may be determined as the length of the Padding 505. An FCS 506 is Frame Check Sequence.

### (Procedure of Processing)

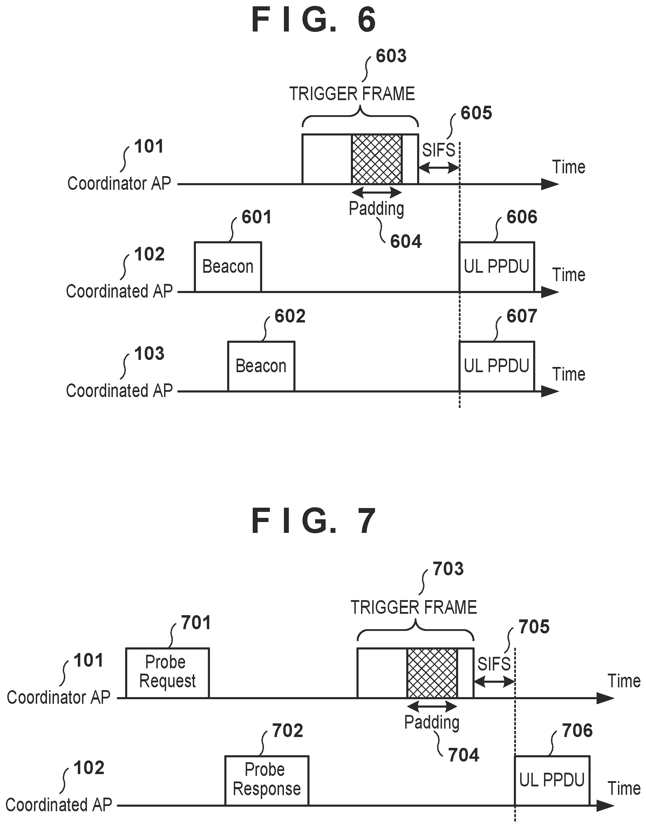

An example of the procedure of communication processing will be described next. Fig. 6 shows an example of the procedure of communication processing in a case where the Coordinated APs actively provide capability information. Note that in the example shown in Fig. 6, two APs (the AP 102 and the AP 103) are shown as the Coordinated APs. One, or three or more Coordinated APs may be used, as a matter of course.

The Coordinated APs (the AP 102 and the AP 103) make capability information indicating a preparation time necessary for starting UL communication included in Beacon frames and notify (broadcast) Beacon frames 601 and 602, respectively. Note that in the example shown in Fig. 6, an example in which notification of capability information is done using the Beacon frames 601 and 602 is shown, but the present invention is not limited to this. For example, each Coordinated AP may make the capability information indicating the preparation time included in an Action frame and actively transmit this. At this time, the Coordinated AP can unicast the Action frame to the Coordinator AP. That is, using an arbitrary frame that can be transmitted with the information of the preparation time included therein, the Coordinated AP can notify the Coordinator AP of the information of the preparation time by an arbitrary form such as broadcast, multicast, or unicast.

Upon receiving the Beacon frames 601 and 602, the Coordinator AP (AP 101) analyzes the frames and confirms the capability information indicating the preparation time necessary for each AP to start UL communication. The AP 101 can thus determine the length of the Padding to be added to the trigger frame. If the length of the Padding to be added to the trigger frame is determined based on the received information, the AP 101 transmits, to the AP 102 and the AP 103, a trigger frame 603 to which a Padding 604 of the length is added. The AP 102 and the AP 103 perform reception processing of the trigger frame 603 with the Padding 604 added. After the elapse of the period of an SIFS 605 from the end of the trigger frame 603, the AP 102 and the AP 103 transmit UL PPDUs 606 and 607 to the AP 101, respectively. In this way, in the processing shown in Fig. 6, the Coordinator AP can adjust the length of the Padding in the trigger frame based on the information of the preparation time actively transmitted from the Coordinated APs. When the length of the Padding is adjusted in this way, the Coordinated APs can complete preparation for UL communication when the SIFS period elapses from the end of the trigger frame.

Fig. 7 shows an example of the procedure of communication processing in a case where upon receiving a request frame from the Coordinator AP, the Coordinated AP notifies capability information in a response frame. Note that the example of Fig. 7 shows only one AP (AP 102) as the Coordinated AP, but two or more Coordinated APs may exist, as a matter of course. That is, the number of Coordinated APs is arbitrary in both a case where the Coordinated AP actively transmits capability information and a case where capability information is transmitted upon receiving a request.

In Fig. 7, to request capability information used to determine the length of the Padding to be added to the trigger frame, the Coordinator AP (AP 101) transmits a predetermined request frame. In the example shown in Fig. 7, the AP 101 transmits a Probe Request frame 701 as the request frame. Upon receiving the request frame, the AP 102 transmits a response frame including capability information indicating the preparation time necessary for starting UL communication. In Fig. 7, the AP 102 transmits a Probe Response frame 702 as a response frame to the Probe Request frame 701. Note that the AP 101 can transmit the Probe Request frame including request information indicating that capability information indicating the preparation time is requested. Only when the Probe Request frame including the request information is received, the AP 102 can return the Probe Response frame including the capability information. However, this is merely an example, and the AP 102 may return the Probe Response frame including the capability information even if the Probe Request frame including no request information is received. The Probe Request frame and the Probe Response frame are examples of a request frame for requesting capability information and a response frame corresponding to it, and frames other than these may be used. For example, the AP 101 may transmit, to the AP 102, an Action frame including information indicating that the information of the preparation time is requested, and the AP 102 may notify the information of the preparation time in a response frame to the Action frame.

Upon receiving the Probe Response frame 702, the AP 101 analyzes the frame and confirms the capability information indicating the preparation time necessary for the AP 102 to start UL communication. The AP 101 can thus determine the length of the Padding to be added to the trigger frame. If the length of the Padding to be added to the trigger frame is determined based on the received information, the AP 101 transmits, to the AP 102, a trigger frame 703 to which a Padding 704 of the length is added. The AP 102 performs reception processing of the trigger frame 703 with the Padding 704 added. After the elapse of the period of an SIFS 705 from the end of the trigger frame 703, the AP 102 transmits a UL PPDU 706 to the AP 101. In this way, in the processing shown in Fig. 7, the Coordinator AP requests the information of the preparation time from the Coordinated AP and obtains the information of the preparation time via the response to the request. The Coordinator AP can then adjust the length of the Padding in the trigger frame based on the information of the preparation time. When the length of the Padding is adjusted in this way, the Coordinated AP can complete preparation for UL communication when the SIFS period elapses from the end of the trigger frame.

Note that in the above-described example, a case where the Coordinated AP actively notifies the information of the preparation time and a case where the notification is done upon receiving a request have been described discriminatingly with reference to Figs. 6 and 7, but the Coordinated AP may execute both of them. That is, the Coordinated AP may notify the information of the preparation time actively (for example, periodically) and also notify the information upon receiving a request frame from the Coordinator AP (for example, temporarily).

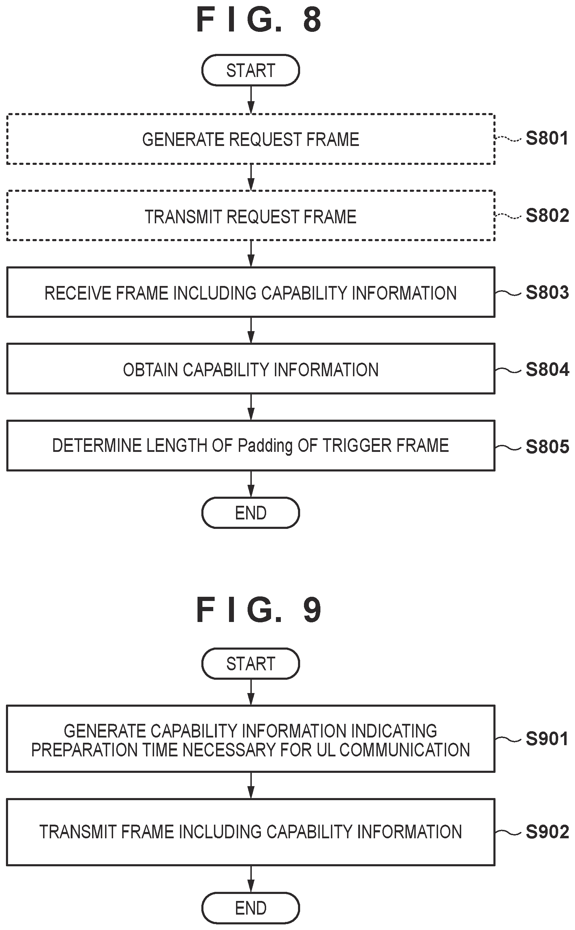

An example of the procedure of processing executed by the Coordinator AP (AP 101) will be described next with reference to Fig. 8. This processing can be implemented by the control unit 202 executing a program stored in the storage unit 201. This processing may be implemented by, for example, a processor included in the communication unit 206. The AP 101 starts the processing upon, for example, determining to transmit a trigger frame for communication between the APs.

The AP 101 receives a frame including capability information indicating the preparation time necessary for starting UL communication (step S803). The AP 101 can receive the frame by, for example, waiting for a frame actively transmitted from another AP that performs coordinated communication using a trigger frame. Also, the AP 101 may generate and transmit a request frame that requests information indicating the preparation time, as needed (steps S801 and S802), and receive a response frame to the request frame, which includes the information of the preparation time. The AP 101 can use, for example, a Probe Request frame as the request frame. In an example, an information element as shown in Fig. 4 can be set in the request frame. The AP 101 obtains capability information included in the frame received in step S803 (step S804) and determines the length of the Padding to be added to the trigger frame based on the capability information (step S805). The AP 101 can determine, as the length of the Padding, a length corresponding to the longest time of the preparation times of one or more Coordinated APs as the target of the trigger frame. The AP 101 may specify the length of the Padding in accordance with, for example, the information of the number of STAs connected to the Coordinated AP as the target of the trigger frame. In an example, there may exist a tendency that the higher the load of the Coordinated AP is, the longer the preparation time is. In this case, according to the tendency, the length of the Padding can be calculated based on the number of STAs connected to each AP. For example, the preparation time indicated by the capability information may be set to the minimum time necessary for starting UL communication, and the AP 101 may add a predetermined time to the minimum time in accordance with the load, thereby specifying a time length corresponding to the length of the Padding. Also, the AP 101 may specify the length of the Padding in accordance with, for example, a traffic amount in the Coordinated AP.

In the above-described way, the Coordinator AP can obtain the capability information indicating the preparation time necessary for each Coordinated AP to start UL communication. Then, the Coordinator AP can determine the length of the Padding of the trigger frame to be transmitted to the Coordinated AP based on the obtained capability information.

Fig. 9 shows an example of the procedure of processing executed by the Coordinated AP (the AP 102 or the AP 103). This processing can be implemented by the control unit 202 executing a program stored in the storage unit 201. This processing may be implemented by, for example, a processor included in the communication unit 206. The AP 102 and the AP 103 each start the processing upon, for example, determining to transmit the capability information indicating the preparation time necessary for UL communication. Note that a description will be made below assuming that the AP 102 is the main constituent to execute the processing, but the AP 103 performs the same processing.

The AP 102 specifies (for example, calculates) the preparation time necessary for UL communication in the self-apparatus and generates capability information indicating the preparation time (step S901). The preparation time indicated here may be the minimum value of time necessary for UL communication. The AP 102 generates a frame including the capability information and transmits it to the Coordinator AP (step S902). For example, information as described above with reference to one of Tables 1 to 3 is included in the frame and transmitted. Also, the AP 102 may transmit the frame including information used to specify the length of the Padding, for example, information capable of specifying the number of connected STAs or the load of communication by the connected STAs. Note that the Coordinator AP (AP 101) may obtain, from the Coordinated AP, information used to specify the length of the Padding such as information indicating the load using a frame different from the frame for transmitting the capability information. Also, in an example, the Coordinated AP may notify the information of the connection form to the Coordinator AP. For example, if the connection form is wired connection, the processing load is assumed to be lower than in a case of wireless connection. Hence, the information of the connection form such as "wired connection" or "wireless connection" may be notified from the Coordinated AP to the Coordinator AP.

In the above-described way, the Coordinated AP can transmit, to the Coordinator AP, the capability information necessary for determining the length of the Padding to be added to the trigger frame. Note that the Coordinated AP may start the processing shown in Fig. 9 upon receiving a request frame (for example, a Probe Request frame or a predetermined Action frame) from the Coordinator AP. Even in a case where no request frame is received, the Coordinated AP may determine to start transmission of the capability information based on, for example, a user operation. Also, the Coordinated AP may start transmission of the capability information using, for example, a Beacon frame when the function as an AP is started.

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2024-001499 filed January 9, 2024, which is hereby incorporated by reference herein.

## Claims

1. A communication apparatus functioning as an access point complying with the IEEE 802.11 series standard, comprising:
reception means for receiving, from one or more other communication apparatuses functioning as an access point, a wireless frame including capability information indicating a preparation time necessary for preparation for transmission of a signal to the communication apparatus;
determination means for determining, based on the capability information, a length of a Padding in a trigger frame for causing the one or more other communication apparatuses to perform the transmission of the signal to the communication apparatus; and
transmission means for transmitting the trigger frame including the Padding of the determined length to the one or more other communication apparatuses in a case where data from the one or more other communication apparatuses should be received.

2. The communication apparatus according to claim 1, wherein
the reception means obtains the capability information by receiving a management frame including the capability information from each of the one or more other communication apparatuses.

3. The communication apparatus according to claim 2, wherein
the management frame is one of a Beacon frame and an Action frame, which is actively transmitted from each of the one or more other communication apparatuses.

4. The communication apparatus according to claim 2 or 3, wherein
the management frame is one of a Probe Response frame and an Action frame, and
the reception means receives the Probe Response frame including the capability information from each of the one or more other communication apparatuses by transmitting a Probe Request frame including information indicating that the capability information is requested, or receives a second Action frame including the capability information from each of the one or more other communication apparatuses by transmitting a first Action frame including information indicating that the capability information is requested.

5. The communication apparatus according to claim 2 or 3, wherein
the management frame is a Probe Response frame, and
in a case where a Probe Request frame that does not include information indicating that the capability information is requested is transmitted, the reception means receives the Probe Response frame including the capability information that each of the one or more other communication apparatuses has actively made to be included.

6. The communication apparatus according to any one of claims 1 to 5, wherein
the information indicating the preparation time is stored in a Trigger Frame MAC Padding Duration subfield included in a field indicating the capability information in the wireless frame.

7. The communication apparatus according to claim 6, wherein
the Trigger Frame MAC Padding Duration subfield includes a bit indicating the preparation time associated with communication between an access point and another access point or indicating the preparation time associated with communication between the access point and a station.

8. The communication apparatus according to any one of claims 1 to 5, wherein
the information indicating the preparation time is stored in a subfield indicating the preparation time associated with communication between an access point and another access point, the subfield being included in a field indicating the capability information in the wireless frame.

9. A communication apparatus functioning as an access point complying with the IEEE 802.11 series standard, comprising:
transmission means for transmitting a wireless frame including capability information indicating a preparation time necessary for preparation for transmission of a signal to another communication apparatus functioning as an access point; and
reception means for receiving, from the other communication apparatus, a trigger frame for causing the communication apparatus to perform the transmission of the signal to the other communication apparatus, the trigger frame including a Padding of a length determined based on the capability information,
wherein the transmission means transmits data to the other communication apparatus based on reception of the trigger frame.

10. The communication apparatus according to claim 9, wherein
the transmission means transmits a management frame including the capability information to the other communication apparatus.

11. The communication apparatus according to claim 10, wherein
the management frame is one of a Beacon frame and an Action frame, and
the transmission means actively transmits the management frame to the other communication apparatus.

12. The communication apparatus according to claim 10 or 11, wherein
the management frame is one of a Probe Response frame and an Action frame, and
the transmission means transmits the Probe Response frame including the capability information to the other communication apparatus in a case where a Probe Request frame including information indicating that the capability information is requested is received from the other communication apparatus, or transmits a second Action frame including the capability information to the other communication apparatus in a case where a first Action frame including information indicating that the capability information is requested is received from the other communication apparatus.

13. The communication apparatus according to claim 10 or 11, wherein
the management frame is a Probe Response frame, and
in a case where a Probe Request frame that does not include information indicating that the capability information is requested is received from the other communication apparatus, the transmission means transmits the Probe Response frame with the actively included capability information to the other communication apparatus.

14. The communication apparatus according to any one of claims 9 to 13, wherein
the information indicating the preparation time is stored in a Trigger Frame MAC Padding Duration subfield included in a field indicating the capability information in the wireless frame.

15. The communication apparatus according to claim 14, wherein
the Trigger Frame MAC Padding Duration subfield includes a bit indicating the preparation time associated with communication between an access point and another access point or indicating the preparation time associated with communication between the access point and a station.

16. The communication apparatus according to any one of claims 9 to 13, wherein
the information indicating the preparation time is stored in a subfield indicating the preparation time associated with communication between an access point and another access point, the subfield being included in a field indicating the capability information in the wireless frame.

17. A communication method executed by a communication apparatus functioning as an access point complying with the IEEE 802.11 series standard, comprising:
receiving, from one or more other communication apparatuses functioning as an access point, a wireless frame including capability information indicating a preparation time necessary for preparation for transmission of a signal to the communication apparatus;
determining, based on the capability information, a length of a Padding in a trigger frame for causing the one or more other communication apparatuses to perform the transmission of the signal to the communication apparatus; and
transmitting the trigger frame including the Padding of the determined length to the one or more other communication apparatuses in a case where data from the one or more other communication apparatuses should be received.

18. A communication method executed by a communication apparatus functioning as an access point complying with the IEEE 802.11 series standard, comprising:
transmitting a wireless frame including capability information indicating a preparation time necessary for preparation for transmission of a signal to another communication apparatus functioning as an access point;
receiving, from the other communication apparatus, a trigger frame for causing the communication apparatus to perform the transmission of the signal to the other communication apparatus, the trigger frame including a Padding of a length determined based on the capability information; and
transmitting data to the other communication apparatus based on reception of the trigger frame.

19. A program configured to cause a computer to function as each means of a communication apparatus defined in any one of claims 1 to 16.
